# EUROPEAN PATENT APPLICATION

(11) **EP 4 539 553 A1**
(43) Date of publication of application: **16.04.2025**
(21) Application number: 22945355.0
(22) Date of filing: 10.06.2022
(51) Int. Cl.: H04W 52/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/098252
(87) International publication number: WO 2023/236214

(57) **Abstract**

A wireless communication method, a terminal device, and a network device are provided. The method includes: determining, by a terminal device, first information if a first receiver of the terminal device receives a wake-up signal, where the first information is used to wake up a second receiver of the terminal device. In this application, after a first receiver receives a wake-up signal, a terminal device may determine first information that is used to wake up a second receiver, so that the terminal device may subsequently wake up the second receiver based on the first information, which facilitates the application of a wake-up mechanism based on a wake-up signal to actual communication.

## Description

### TECHNICAL FIELD

This application relates to the field of communications technologies, and more specifically, to a wireless communication method, a terminal device, and a network device.

### BACKGROUND

To reduce power consumption of a terminal device, a network device transmits a wake-up signal to the terminal device. Correspondingly, when a first receiver of the terminal device receives the wake-up signal, a second receiver may be waked up to communicate with the network device. At present, however, it is not specifically defined how to wake up the second receiver after the terminal device receives the wake-up signal.

### SUMMARY

This application provides a wireless communication method, a terminal device, and a network device. Various aspects involved in this application are described below.

According to a first aspect, a wireless communication method is provided, including: determining, by a terminal device, first information if a first receiver of the terminal device receives a wake-up signal, where the first information is used to wake up a second receiver of the terminal device.

According to a second aspect, a wireless communication method is provided, including: determining, by a network device, first information, where the first information is used to wake up a second receiver of a terminal device; and the second receiver is waked up by a first receiver of the terminal device based on a wake-up signal transmitted by the network device.

According to a third aspect, a terminal device is provided, including: a processing unit, configured to determine first information if a first receiver of the terminal device receives a wake-up signal, where the first information is used to wake up a second receiver of the terminal device.

According to a fourth aspect, a network device is provided, including: a processing unit, configured to determine first information, where the first information is used to wake up a second receiver of a terminal device; and the second receiver is waked up by a first receiver of the terminal device based on a wake-up signal transmitted by the network device.

According to a fifth aspect, a terminal device is provided, including a processor, a memory, and a communications interface, where the memory is configured to store one or more computer programs; and the processor is configured to invoke the computer program in the memory, to cause the terminal device to perform some or all of the steps of the method in the first aspect.

According to a sixth aspect, a network device is provided, including a processor, a memory, and a communications interface, where the memory is configured to store one or more computer programs; and the processor is configured to invoke the computer program in the memory, to cause the network device to perform some or all of the steps of the method in the second aspect.

According to a seventh aspect, an embodiment of this application provides a communications system. The system includes the foregoing terminal and/or network device. In another possible design, the system may further include another device interacting with the terminal or network device in the solution provided in embodiments of this application.

According to an eighth aspect, an embodiment of this application provides a computer-readable storage medium, where the computer-readable storage medium stores a computer program; and the computer program causes a terminal to perform some or all of the steps of a method in the foregoing aspects.

According to a ninth aspect, an embodiment of this application provides a computer program product, where the computer program product includes a non-transitory computer-readable storage medium that stores a computer program; and the computer program is operable to cause a terminal to perform some or all of the steps of a method in the foregoing aspects. In some implementations, the computer program product may be a software installation package.

According to a tenth aspect, an embodiment of this application provides a chip, where the chip includes a memory and a processor; and the processor may invoke a computer program from the memory and run the computer program, to implement some or all of the steps of a method in the foregoing aspects.

In this application, after a first receiver receives a wake-up signal, a terminal device may determine first information that is used to wake up a second receiver, so that the terminal device may subsequently wake up the second receiver based on the first information, which facilitates the application of a wake-up mechanism based on a wake-up signal to actual communication.

### BRIEF DESCRIPTION OF DRAWINGS

FIG. 1 shows a wireless communications system 100 to which an embodiment of this application is applied.
FIG. 2 is a schematic diagram of a DRX mechanism to which an embodiment of this application is applicable.
FIG. 3 is a schematic diagram of a DRX mechanism to which an energy-saving signal has been introduced and to which an embodiment of this application is applicable.
FIG. 4 is a schematic diagram of a DRX mechanism to which an energy-saving signal has been introduced and to which an embodiment of this application is applicable.
FIG. 5 shows a position of a PF in a DRX cycle and a position of a PO in a PF.
FIG. 6 is a schematic diagram of a terminal device based on a wake-up receiver.
FIG. 7 is a schematic diagram of an on-off keying modulation scheme to which an embodiment of this application is applicable.
FIG. 8 is a schematic diagram of a CORSET corresponding to a PDCCH according to an embodiment of this application.
FIG. 9 is a schematic diagram of a wireless communication method according to an embodiment of this application.
FIG. 10 is a schematic diagram of a first time offset according to an embodiment of this application.
FIG. 11 is a schematic diagram of a reception time of a wake-up signal and a wake-up start time according to an embodiment of this application.
FIG. 12 is a schematic diagram of a reception time of a wake-up signal and a wake-up start time according to another embodiment of this application.
FIG. 13 is a schematic diagram of a reception time of a wake-up signal and a wake-up start time according to still another embodiment of this application.
FIG. 14 is a schematic diagram of a reception time of a wake-up signal and a wake-up start time according to yet another embodiment of this application.
FIG. 15 is a schematic diagram of an activated BWP being indicated by a wake-up signal according to an embodiment of this application.
FIG. 16 is a schematic diagram of a terminal device according to an embodiment of this application.
FIG. 17 is a schematic diagram of a network device according to an embodiment of this application.
FIG. 18 is a schematic structural diagram of a communications apparatus according to an embodiment of this application.

### DESCRIPTION OF EMBODIMENTS

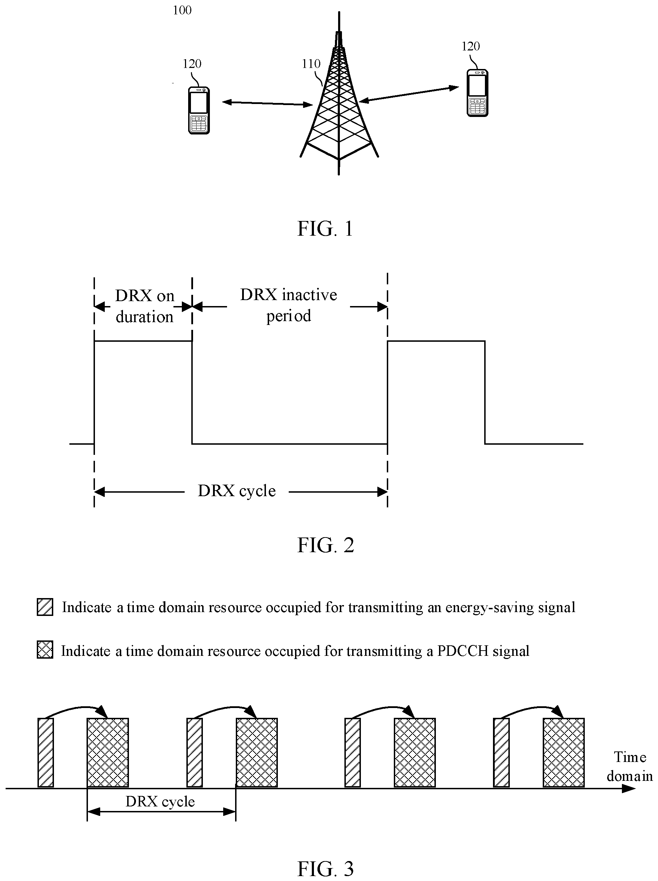

The technical solutions in this application are described below with reference to the accompanying drawings. For ease of understanding, terms and communication processes that may be involved in embodiments of this application are described first with reference to FIG. 1 to FIG..

FIG. 1 shows a wireless communications system 100 to which an embodiment of this application is applied. The wireless communications system 100 may include a network device 110 and a terminal device 120. The network device 110 may be a device that communicates with the terminal device 120. The network device 110 may provide communication coverage for a specific geographic area, and may communicate with the terminal device 120 located in the coverage area.

FIG. 1 illustratively shows one network device and two terminals. Optionally, the wireless communications system 100 may include a plurality of network devices, and another quantity of terminal devices may be located in the coverage range of each of the network devices, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long term evolution (long term evolution, LTE) system, an LTE frequency division duplex (frequency division duplex, FDD) system, and LTE time division duplex (time division duplex, TDD) system. The technical solutions provided in this application may also be applied to future communications systems, such as a 6th generation mobile communications system and a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may refer to a device providing a user with voice and/or data connectivity, and may be used to connect people, objects, and machines. For example, the terminal device is a device with a wireless connection function, such as a handheld device and a vehicle-mounted device. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be used to act as a base station. For example, the UE may act as a scheduling entity, which provides a sidelink signal between UEs in V2X, D2D, or the like. For example, a cellular phone and a vehicle communicate with each other by using a sidelink signal. A cellular phone and a smart home device communicate with each other, without relay of a communication signal through a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that allows the terminal device to access to a wireless network. The base station may broadly cover various names in the following, or may be interchangeable with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network side device in a 6G network, a device that functions as a base station in a future communications system, or the like. The base station may support networks of the same or different access technologies. A specific technology and a specific device form used by the network device are not limited in embodiments of this application.

The base station may be fixed or mobile. For example, a helicopter or an unmanned aerial vehicle may be configured to act as a mobile base station, and one or more cells may move according to a position of the mobile base station. In other examples, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted; may be deployed on a water surface; or may be deployed on a plane, a balloon, or a satellite in the air. A scenario in which the network device and the terminal device are located is not limited in embodiments of this application.

It should be understood that all or some of functions of the communications device in this application may also be implemented by software functions running on hardware, or by virtualization functions instantiated on a platform (for example, a cloud platform).

### PDCCH-based power saving for a terminal

In evolution of a communications protocol (for example, a 5G communications protocol), increasingly higher requirements are imposed on power saving of terminal devices. To meet requirements related to power saving, a discontinuous reception (discontinuous reception, DRX) mechanism is introduced.

Referring to FIG. 2, the DRX mechanism includes configuring a DRX cycle (cycle) for a terminal that is in a radio resource control (radio resource control, RRC) connected state. One DRX cycle consists of a "DRX inactive period (opportunity for DRX)" and a "DRX active period (on duration) which is also referred to as DRX on duration". During the DRX on duration, a terminal device needs to monitor and receive a downlink channel (for example, a physical downlink control channel (physical downlink control channel, PDCCH)) and a signal. During the DRX inactive period, the terminal device may not receive a downlink channel (for example, a PDCCH) or a signal, to reduce power consumption.

However, an amount of power saved by the DRX mechanism for the terminal device is still limited. For most terminal devices, there may be no need to receive data transmission for a long period of time (for example, one or more DRX cycles), but there is still a need to maintain a periodic wake-up mechanism to monitor possible downlink transmission. Further optimization can be made for power saving of such terminal devices. In the 3GPP R16 standard, an energy-saving signal is introduced for power saving of a terminal device in an RRC connected (RRC_CONNECTED) state.

The energy-saving signal may be used in combination with the DRX mechanism. Referring to FIG. 3, the terminal device receives the energy-saving signal before DRX on duration, and determines, based on an indication of the energy-saving signal, whether the terminal device is to be in an awake state during the DRX on duration. When the terminal device has data transmission in one DRX cycle, the energy-saving signal may "wake up" the terminal device, so that the terminal device can monitor a PDCCH during DRX on duration. Otherwise, when the terminal does not have any data transmission in one DRX cycle, the energy-saving signal may not "wake up" the terminal device. Accordingly, the terminal device does not need to monitor a PDCCH during DRX on duration and is in a sleep state.

In some implementations, the energy-saving signal may be carried in a PDCCH, and may be specifically carried in a downlink control information (downlink control information, DCI) format 2_6.

### Paging process

In the 3GPP R17 standard, power saving of a process in which a terminal device in an RRC idle (idle)/inactive (inactive) state receives a paging message is optimized, and information having a function similar to that of an energy-saving signal, namely, a paging early indication (paging early indication, PEI), is introduced.

If the terminal device receives the paging message in a DRX manner, that is, there is a paging occasion (paging occasion, PO) in a DRX cycle, the terminal device receives the paging message only in the PO and does not receive the paging message in a time different from the PO, thereby saving power.

Generally, before receiving the paging message, the terminal device needs to first receive a paging parameter through a system message, and then calculate a frame number of a paging frame (paging frame, PF) in which the paging message is located and a PO by using the paging parameter in combination with its own UE_ID. Then, the terminal device monitors, in the PO on the PF, a PDCCH scrambled by a P-RNTI, to receive paging indication information, and finally receives the paging message based on the paging indication information. In other words, the PF indicates a frame number of a system frame at which the paging message should appear, and the PO indicates a time at which the paging message may appear.

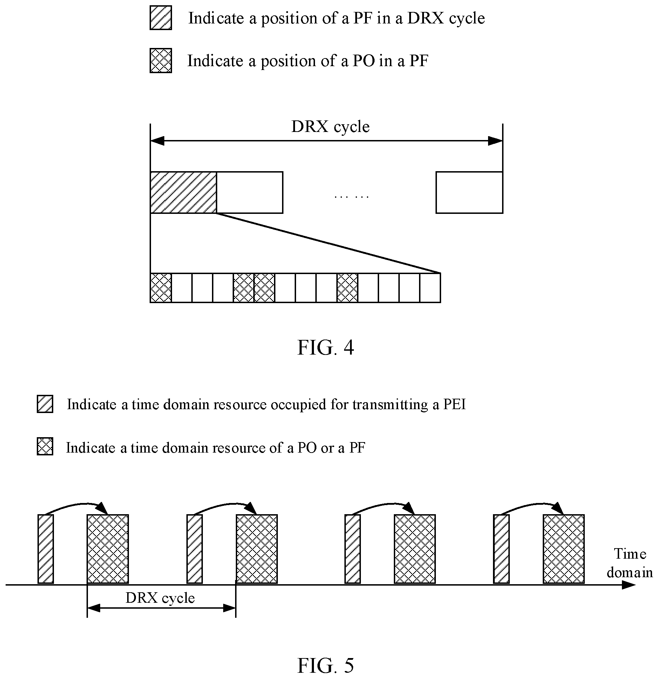

FIG. 5 shows a position of a PF in a DRX cycle and a position of a PO in the PF. As shown in FIG. 5, the PF is located in a DRX cycle (or a paging cycle (paging cycle)), one PF may include one or more POs, and the plurality of POs may correspond to different terminals. However, for a specific terminal device, in a DRX cycle (or a paging cycle), the terminal device only needs to monitor its own PO.

In an actual case, a probability that the terminal device is paged may not be high. However, the terminal device still needs to periodically detect a PDCCH on a corresponding PO, which causes relatively high power consumption of the terminal device. To resolve this problem, a PEI is introduced in the 3GPP R17 standard. Referring to FIG. 5, the PEI is used to instruct, before a target PO is reached, the terminal device to or not to receive a paging PDCCH in the PO. In some implementations, the PEI may be carried in a PDCCH channel, and may be specifically carried in a DCI format 2_7.

In addition, in the R17 standard, power saving of a terminal device in the RRC_CONNECTED state is further enhanced; an enhancement solution for search space set group switching in R16 is introduced; and a solution of skipping PDCCH detection when needed so as to save power, namely, a PDCCH skipping (PDCCH skipping) solution, is further included. Control information related to search space set group switching and PDCCH skipping may also be carried in a PDCCH.

### Wake-up receiver-based power saving for a terminal

For further power saving of a terminal device, in the 3GPP R18 standard, introducing a wake-up receiver (wake up receiver, WUR) (also referred to as a "first receiver") may be considered for receiving a wake-up signal. The wake-up receiver features ultra-low cost, ultra-low complexity, and ultra-low power consumption, and mainly receives a wake-up signal based on envelope detection. Therefore, a modulation scheme, a waveform, and the like of the wake-up signal (wake up signal, WUS) received by the wake-up receiver are different from those of a signal carried by a PDCCH as defined in the existing 3GPP R16 and R17 standards. The wake-up signal is mainly an envelope signal obtained by performing ASK modulation on a carrier signal. Demodulation of the envelope signal is mainly completed by driving a low-power circuit based on energy provided by a radio frequency signal. Therefore, the WUR may be passive. Certainly, the wake-up receiver may be powered by using the terminal device. Regardless of the power supply method, the WUR greatly reduces power consumption compared to a conventional receiver (also referred to as a primary receiver or a second receiver) in the terminal device.

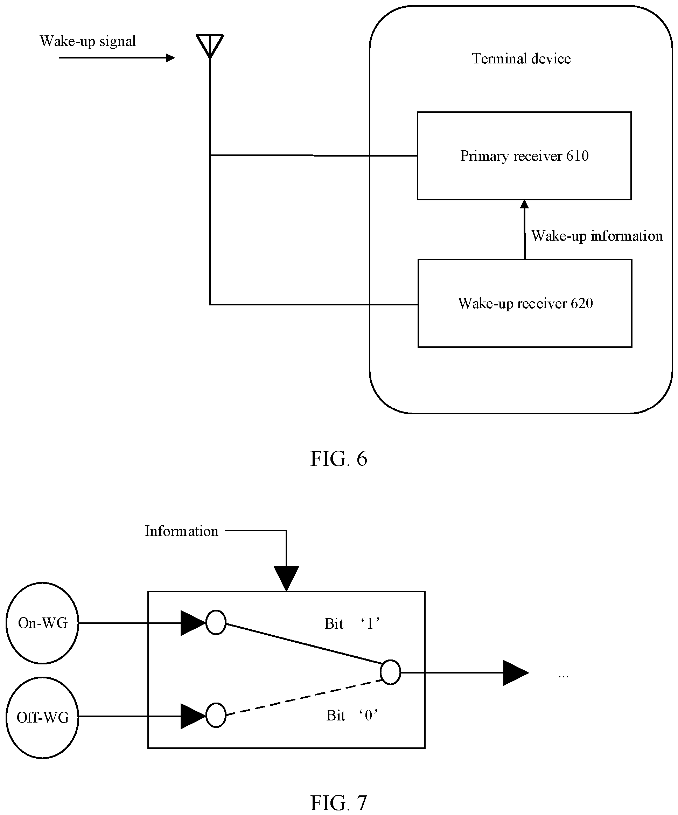

FIG. 6 is a schematic diagram of a terminal device based on a wake-up receiver. Referring to FIG. 6, the wake-up receiver 610 may receive a wake-up signal. If the wake-up signal indicates that a primary receiver 620 needs to be waked up, the terminal device wakes up (or enables) the primary receiver 620. Otherwise, the primary receiver of the terminal device may be in an off state.

In addition, it is unnecessary to enable or disable the wake-up receiver 610 as a conventional receiver to save power. Instead, the wake-up receiver 610 may be activated by a WUS and receive wake-up information in the WUS at any time. The wake-up signal is mainly an envelope signal obtained by performing ASK modulation on a carrier signal. For example, a WUS used in the 802.11 technology uses on-off keying (On-Off Keying, OOK). A modulation principle of OOK is to modulate an amplitude of a carrier signal to a non-zero value and a zero value that respectively correspond to On and Off and are used to represent information bits. OOK is also referred to as binary amplitude shift keying (2ASK). Referring to FIG. 7, bit 1 may be modulated as "On", and bit 0 may be correspondingly modulated as "Off".

It should be noted that the wake-up receiver may be combined with the terminal device, and may be as an additional module of a receiver of the terminal device, or may be separately used as a wake-up functional module of the terminal device.

### PDCCH detection

A transmission resource of a PDCCH may be defined and configured by using a search space (search space) and a control resource set (CORESET). A network device may instruct, by using a PDCCH search space, a terminal device to detect a PDCCH on a corresponding time-frequency resource. Generally, the terminal device may be notified of the PDCCH search space by the network device via RRC signalling. Configuration information of the search space includes the following information.
- Search space ID: a search space index.
- controlResourceSetId (controlResourceSetId) for indicating a configured ID of the CORESET, and configuring a time-frequency resource of the PDCCH search space.
- Period of a monitored slot and offset within the period: currently, a period supported by NR includes 1, 2, 4, 5, 8, 10, 16, 20, 40, 80, 160, 320, 640, 1280, or 2560 slots.
- Duration (Duration) indicating a quantity of slots consecutively monitored in a PDCCH search space period.
- monitoringSymbolsWithinSlot (monitoringSymbolsWithinSlot) for indicating a position of the first symbol of a CORESET monitored in a slot monitored for a PDCCH.
- PDCCH candidates (PDCCH candidates) for indicating configuration information of a PDCCH candidate.
- Type of a search space indicating whether a PDCCH search space is a common search space (common search space) or a UE-specific search space (UE-specific search space).

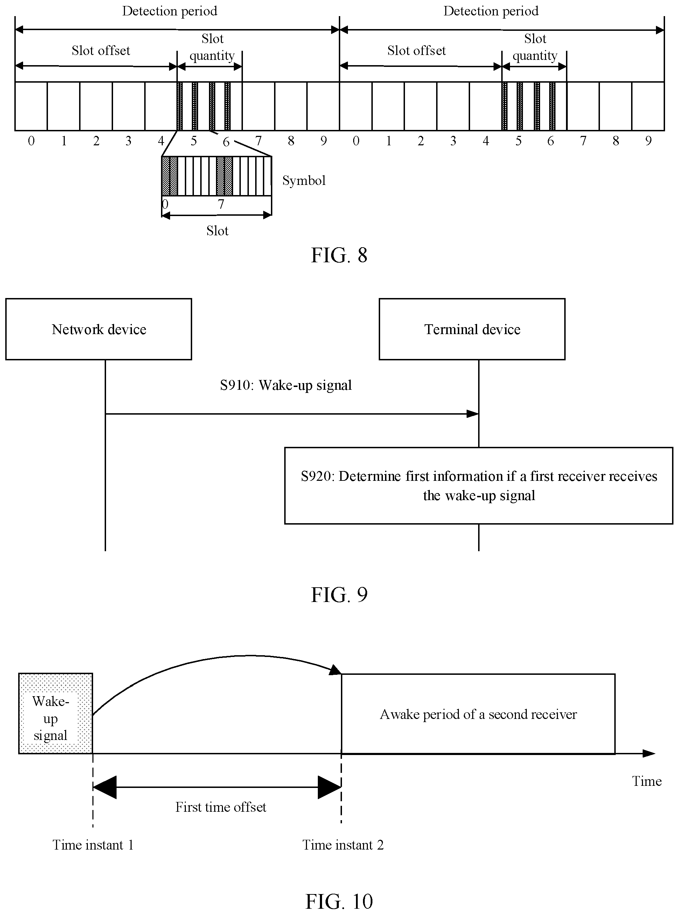

Time domain configuration information of a search space may include a detection period, a slot offset, a slot quantity, and a position of a symbol in a slot. Referring to FIG. 8, it is assumed that the detection period includes 10 slots, the slot offset is 5 slots, and the slot quantity is two. In this case, a CORESET corresponding to a control resource set index includes two symbols. The terminal device may monitor symbol sets of two CORESETs in a monitored slot. Positions of the first symbols in the symbol sets of the two CORESETs are symbol 0 and symbol 7 in the slot, respectively.

In NR, a configuration of a PDCCH search space includes a CORESET. The information about the CORESET indicates information that is used to carry RBs occupied by a PDCCH in frequency domain, a quantity of OFDM symbols occupied by the PDCCH in time domain, and the like. In an example, configuration information of a CORESET that is provided in RRC configuration information may include the following information:
- ControlResourceSetId (ControlResourceSetId) representing the number of a CORESET, where a value of the number may range from 1 to 11, and CORESET 0 may be a CORESET indicated in a broadcast message.
- frequencyDomainResources (frequencyDomainResources) representing a frequency domain resource of a CORESET, and for indicating an RB included in the CORESET.
- Duration (duration) indicating a quantity of consecutive symbols in a CORESET, where a value range thereof is {1, 2, 3}.
- cce-REG-MappingType (cce-REG-MappingType) that may be configured to an interleaved mapping manner or a non-interleaved mapping manner.
- precoderGranularity (precoderGranularity) for indicating whether a precoding granularity of a demodulation reference signal (demodulation reference signal, DMRS) is broadband precoding or narrow-band precoding.

### Bandwidth part (bandwidth part, BWP)

Using the NR technology as an example, a BWP is defined as a set of consecutive resource blocks in carrier bandwidth. The BWP is designed to avoid that a terminal device always operates in entire carrier bandwidth, especially for a low-end terminal device (or a terminal device with a low capability) that supports limited bandwidth and cannot operate in broadband. Introduction of the BWP causes the terminal device to support more flexible operating bandwidth, so that complexity and power consumption of the terminal device are reduced.

In some implementations, the network device may configure at most four uplink BWPs and at most four downlink BWPs for the terminal device in the RRC_CONNECTED state. However, one terminal device may generally have one activated downlink BWP and one activated uplink BWP at one time instant. The activated BWP is used for the terminal device to perform data transmission on this BWP.

In some other implementations, the activated BWP may be switched between different BWPs. On each downlink BWP, each terminal device may be configured with a plurality of CORESTs (for example, three CORESTs) and a plurality of search spaces (for example, 10 search spaces).

As described above, to reduce power consumption of a terminal device, a network device transmits a wake-up signal to the terminal device. Correspondingly, when a first receiver (namely, a WUR) of the terminal device receives the wake-up signal, a second receiver (namely, a primary receiver) may be waked up to communicate with the network device. At present, however, it is not specifically defined how to wake up the second receiver after the terminal device receives the wake-up signal.

A wireless communication method according to an embodiment of this application is described below with reference to FIG. 9. The method shown in FIG. 9 may include step S910 and step S920.

In step S910, a network device transmits a wake-up signal to a terminal device.

It should be noted that in addition to the foregoing transmitting manner, the wake-up signal may also be transmitted in another transmitting manner specified in a future communications system. Certainly, the wake-up signal may alternatively be transmitted by another device (for example, another terminal device), which is not limited in embodiments of this application.

In step S920, the terminal device determines first information if a first receiver of the terminal device receives the wake-up signal, where the first information is used to wake up a second receiver of the terminal device.

The first information may be used to indicate a manner of waking up the second receiver. In some implementations, the first information may include second information that indicates a wake-up time of the second receiver. In some other implementations, the first information may include third information that indicates an operating frequency domain after the terminal device is waked up. Certainly, the first information may include both the second information and the third information, which is not limited in embodiments of this application.

In embodiments of this application, after a first receiver receives a wake-up signal, a terminal device may determine first information that is used to wake up a second receiver, so that the terminal device may subsequently wake up the second receiver based on the first information, which facilitates the application of a wake-up mechanism based on a wake-up signal to actual communication.

For ease of understanding, a solution in which the first information includes the second information and a solution in which the first information includes the third information are described with reference to Embodiment 1 and Embodiment 2, respectively.

### Embodiment 1: The first information may include the second information.

As described above, the second information indicates the wake-up time of the second receiver. The wake-up time may include one or more of the following: a wake-up start time of the second receiver, a wake-up duration period of the second receiver, or a wake-up end time of the second receiver.

The wake-up start time is used to indicate a time at which the terminal device wakes up the second receiver. In other words, the terminal device starts to wake up the second receiver at the wake-up start time.

The wake-up duration period is used to indicate duration during which the second receiver remains awake. In other words, the second receiver may remain in an active state within the wake-up duration period.

The wake-up end time is used to indicate a time at which the terminal device disables the second receiver. In other words, the terminal device may disable the second receiver at the wake-up end time, so that the second receiver enters a dormant state.

In some implementations, the second information may be determined based on a first time offset, where the first time offset is a time offset between a reception time of the wake-up signal and the wake-up time of the second receiver. Therefore, the first time offset may also be referred to as a "wake-up offset time".

For example, the wake-up time includes the wake-up start time. In this case, the first time offset may be a time offset between the reception time of the wake-up signal and the wake-up start time. For example, the wake-up time includes the wake-up end time. In this case, the first time offset may be a time offset between the reception time of the wake-up signal and the wake-up end time. For example, the wake-up time includes the wake-up duration period. In this case, the first time offset may be a time offset between the reception time of the wake-up signal and a time instant in the wake-up duration period.

In addition, the reception time of the wake-up signal may be a start time of receiving the wake-up signal by the terminal device, or the reception time of the wake-up signal may be an end time of receiving the wake-up signal by the terminal device. This is not limited in embodiments of this application.

For ease of understanding, the first time offset in embodiments of this application is described below with reference to FIG. 10 by using an example in which the reception time of the wake-up signal is the end time of receiving the wake-up signal and the wake-up time includes the wake-up start time. Referring to FIG. 10, it is assumed that the wake-up signal is used to wake up the second receiver to enable the same to be in an awake state during an awake period. The end time of receiving the wake-up signal is time instant 1, and the wake-up start time (in other words, the start time of the awake period) is time instant 2. Correspondingly, the first time offset may be a time offset between the time instant 1 and the time instant 2.

In some implementations, the first time offset may be determined based on one or more of the following information: a terminal device capability; a time domain resource of a target channel corresponding to the wake-up signal; a time domain resource of a PF or a PO corresponding to the wake-up signal; or DRX on duration corresponding to the wake-up signal. Certainly, the second information may alternatively be determined based on other information, which is not limited in embodiments of this application.

In some scenarios, different terminal devices may have different terminal device capabilities. For a terminal device having a relatively high terminal device capability, the corresponding first time offset may be relatively small. For a terminal device having a relatively low terminal device capability, the corresponding first time offset may be relatively large. As such, terminal devices having different terminal device capabilities may correspond to different first time offsets, which facilitates improving reasonableness of setting a wake-up time. Certainly, in embodiments of this application, terminal devices having different terminal device capabilities may correspond to a same first time offset, to simplify complexity of setting a wake-up time.

The terminal device capability may include a preparation time required for waking up the second receiver, where the preparation time may be, for example, an enabling preparation time of the second receiver. Generally, a higher terminal device capability leads to a shorter preparation time required for waking up the second receiver. On the contrary, a lower terminal device capability leads to a longer preparation time required for waking up the second receiver. Certainly, the terminal device capability may further include a time for which the terminal device processes the wake-up signal. Therefore, in embodiments of this application, the terminal device capability may also be referred to as a "terminal device processing capability". In addition, in embodiments of this application, the terminal device capability may further include another capability, which is not limited in embodiments of this application.

In the time domain resource of the target channel corresponding to the wake-up signal, the target channel corresponding to the wake-up signal may be understood as a target channel that the wake-up signal wakes up the terminal device to receive. Correspondingly, if a time interval between the time domain resource of the target channel and the reception time of the wake-up signal is relatively long, the corresponding first time offset may be relatively large. On the contrary, if a time interval between the time domain resource of the target channel and the reception time of the wake-up signal is relatively short, the corresponding first time offset may be relatively small.

In some scenarios, waking up the terminal device is mainly to cause the terminal device to receive scheduling information of control information or data, and the scheduling information is generally obtained by receiving a PDCCH. Therefore, the target channel may be a PDCCH. Correspondingly, the first time offset may be determined based on a transmission resource of the PDCCH.

Based on the PDCCH transmission manner described above, the transmission resource of the PDCCH may be, for example, a monitoring occasion of the PDCCH, or a time domain resource included in a CORESET corresponding to the PDCCH. For example, still referring to FIG. 8, the transmission resource of the PDCCH may be the time domain resource of the CORESET corresponding to the PDCCH. The CORESET includes two symbols, and the position of the first symbol in the symbols included in the CORESET is a symbol 0 in a slot.

With respect to the time domain resource of the PF or PO corresponding to the wake-up signal, the PF or PO corresponding to the wake-up signal may be understood as the corresponding PF or PO at which the wake-up signal wakes up the terminal device to receive a paging message. Correspondingly, if a time interval between the time domain resource of the PF or PO and the reception time of the wake-up signal is relatively long, the corresponding first time offset may be relatively large. On the contrary, if a time interval between the time domain resource of the PF or PO and the reception time of the wake-up signal is relatively short, the corresponding first time offset may be relatively small.

The DRX on duration corresponding to the wake-up signal may be understood as DRX on duration in which the terminal device waked up by the wake-up signal is in an active state. Correspondingly, if a time interval between the DRX on duration and the reception time of the wake-up signal is relatively long, the corresponding first time offset may be relatively large. On the contrary, if a time interval between the DRX on duration and the reception time of the wake-up signal is relatively short, the corresponding first time offset may be relatively small.

In some implementations, the first time offset may be pre-configured. For example, the network device may transmit configuration information to the terminal device in a pre-configuration manner, to configure the first time offset. For example, the configuration information may be carried in RRC signalling or a system message. Certainly, the configuration information may be transmitted by using dedicated signalling, which is not limited in embodiments of this application.

In some other implementations, the first time offset may be pre-defined, for example, may be pre-defined in the terminal device at delivery of the terminal device.

In still some other implementations, the first time offset may be flexibly configured for the terminal device, for example, may be configured by the network device for the terminal device by using the wake-up signal. In other words, the first time offset is determined based on an indication of the wake-up signal. The wake-up signal may indicate the first time offset in an explicit manner. For example, the wake-up signal may carry indication information of the first time offset. Alternatively, the wake-up signal may indicate the wake-up start time in an implicit manner. For example, a resource position of the wake-up signal is used to indicate the first time offset.

It should be noted that the foregoing mainly uses the wake-up start time as an example for description. Certainly, the wake-up start time may be replaced with the wake-up end time. In this case, a time offset between the reception time of the wake-up signal and the wake-up end time may be represented by adding a time offset corresponding to the wake-up duration period to the first time offset. For brevity, details are not described below.

In some implementations, the wake-up duration period may be pre-configured, pre-defined, or flexibly configured, for example, may be flexibly configured for the terminal device by using the wake-up signal. This is not limited in embodiments of this application.

Generally, for a same terminal device, all information such as the time domain resource of the target channel corresponding to the wake-up signal, the time domain resource of the PF or the PO corresponding to the wake-up signal, and the DRX on duration corresponding to the wake-up signal are variable, not to mention different terminal devices. Therefore, it is relatively complex to determine the first time offset based on the foregoing information. Each time the foregoing information varies, the first time offset may need to be re-determined. Therefore, to simplify complexity of determining the first time offset, an embodiment of this application further provides a manner of determining a wake-up time.

In embodiments of this application, the first time offset is divided into a preset second time offset and a third time offset, where the second time offset is a preset time offset that uses a reception time of the wake-up signal as a start time, and the third time offset is a time offset from an end time of the second time offset to a wake-up start time of the second receiver.

In this way, the second time offset may be understood as a relatively fixed time offset, and the third time offset may be understood as an adjustable time offset. In addition, the third time offset may be indirectly determined in a configuration process of the target channel, the time domain resource of the PF, the time domain resource of the PO, the DRX on duration, or the like. Therefore, it may be necessary to determine only the relatively fixed second time offset, which facilitates simplifying the complexity of determining the first time offset.

As described above, the second time offset may be a relatively fixed time offset. Therefore, information about a value of the second time offset may also be relatively fixed information. For example, the value of the second time offset may be determined based on the terminal device capability described above. A related description of the terminal device capability and a relationship between the terminal device capability and a value of a time offset are described above. For brevity, details are not described herein again.

In embodiments of this application, a configuration manner of the second time offset is the same as the above-described configuration manner of the first time offset, or may be a pre-definition manner, a pre-configuration manner, a manner of determining based on the indication of the wake-up signal, or the like. For details, refer to the foregoing description. For brevity, details are not described herein again.

For ease of understanding, the third time offset is described below by using scenarios such as a target channel, a paging message, DRX on duration, and the like as examples.

In the example in which the terminal device is waked up to receive the target channel, the third time offset may include a time offset from the end time of the second time offset to a start time of a time domain resource of the target channel.

It should be noted that the time domain resource of the target channel may include the first time domain resource of the target channel. For example, when the target channel includes a PDCCH, the first time domain resource of the target channel may be the first monitoring occasion corresponding to the PDCCH, or the first CORSET corresponding to the PDCCH. A wake-up start time of the terminal device is a start time of the first time domain resource of the target channel, which avoids the case that the start time of the first time domain resource of the target channel can be reached only after the terminal device is waked up and waits for a period. This facilitates improving the extent to which the power of the terminal device is saved. Certainly, in embodiments of this application, the time domain resource of the target channel may alternatively include a particular time domain resource of the target channel, or may include the last time domain resource of the target channel.

In addition, the start time of the time domain resource may be replaced with an end time of the time domain resource or a time instant corresponding to the time domain resource. This is not limited in embodiments of this application.

If the third time offset is a time offset from the end time of the second time offset to the start time of the first time domain resource of the target channel, the wake-up start time may correspondingly be a start time of the first time domain resource of a target channel received by the terminal device after the second time offset has elapsed. For example, the target channel is a PDCCH. In this case, the wake-up start time may be a start time of the first monitoring occasion (or the first CORSET) after the second time offset has elapsed.

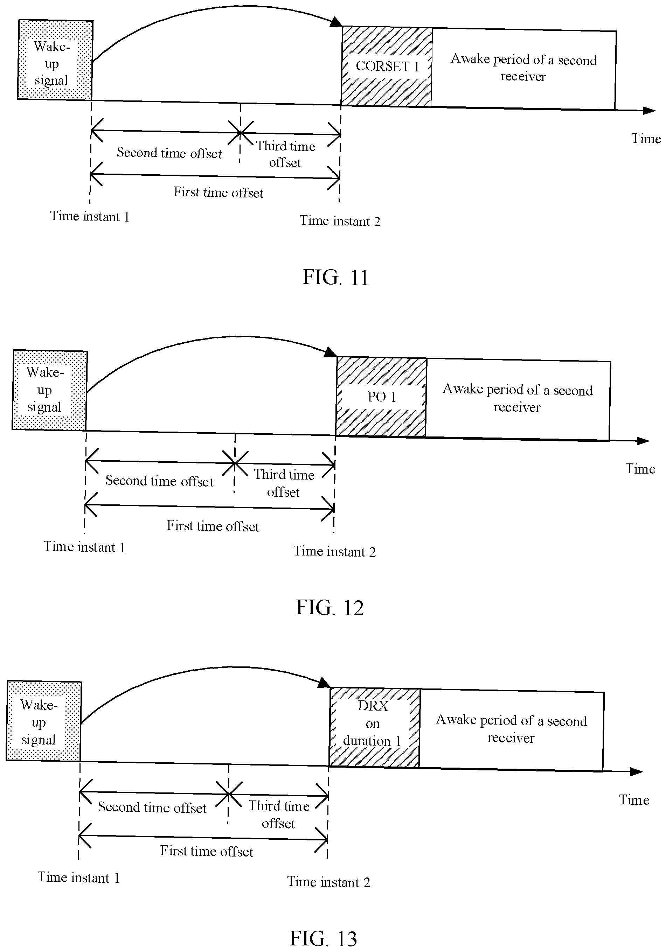

For ease of understanding, a relationship between the reception time of the wake-up signal and the wake-up start time is described with reference to FIG. 11 by using an example in which the target channel is a PDCCH.

Referring to FIG. 11, it is assumed that the wake-up signal is used to wake up the second receiver for detecting a PDCCH in CORSET 1, and that the end time of receiving the wake-up signal is time instant 1. In this case, the wake-up start time (denoted as time instant 2) may be a start time of the first CORSET (namely, CORSET 1) of a PDCCH received by the terminal device after the second time offset has elapsed.

Correspondingly, the first time offset is a time offset between time instant 1 and time instant 2, and the first time offset includes a second time offset and a third time offset. The second time offset may be a preset time offset whose start time is time instant 1, and the third time offset may be a time offset between an end time of the second time offset and the start time of CORSET 1.

In the example in which the terminal device is waked up to receive the paging message, the third time offset may include a time offset from the end time of the second time offset to a start time of a time domain resource of a PF (or PO) corresponding to the paging message.

It should be noted that the PF (or PO) may be the first PF (or PO) after the second time offset has elapsed. In this case, the wake-up start time is a start time of the first PF (or the first PO), which avoids the case that the start time of the first PF (or the first PO) can be reached only after the terminal device is waked up and waits for a period. This facilitates improving the extent to which the power of the terminal device is saved. Certainly, in embodiments of this application, the PF (or PO) may be any PF (or any PO) after the second time offset has elapsed. This is not limited in embodiments of this application.

In addition, the start time of the time domain resource may be replaced with an end time of the time domain resource or a particular time instant of the time domain resource. This is not limited in embodiments of this application.

If the third time offset is a time offset from the end time of the second time offset to the start time of the first PF (or the first PO), the wake-up start time may correspondingly be a start time of the first PF or the first PO corresponding to the terminal device after the second time offset has elapsed.

For ease of understanding, a relationship between the reception time of the wake-up signal and the wake-up start time is described with reference to FIG. 12 by using an example in which the target channel is a PDCCH.

Referring to FIG. 12, it is assumed that the wake-up signal is used to wake up the second receiver for detecting a paging message in PO 1, and that the end time of receiving the wake-up signal is time instant 1. In this case, the wake-up start time (denoted as time instant 2) may be a start time of the first PO corresponding to the terminal device after the second time offset has elapsed.

Correspondingly, the first time offset is a time offset between time instant 1 and time instant 2, and the first time offset includes a second time offset and a third time offset. The second time offset may be a preset time offset whose start time is time instant 1, and the third time offset may be a time offset between an end time of the second time offset and the start time of PO 1.

For example, the terminal device supports a DRX mechanism. In this case, the third time offset may include a time offset from the end time of the second time offset to a start time of the DRX on duration.

It should be noted that the DRX on duration may be the first DRX on duration after the second time offset has elapsed. In this case, the wake-up start time is a start time of the first DRX on duration, which avoids the case that the start time of the first DRX on duration can be reached only after the terminal device is waked up and waits for a period. This facilitates improving the extent to which the power of the terminal device is saved. Certainly, in embodiments of this application, the DRX on duration may be any DRX on duration after the second time offset has elapsed. This is not limited in embodiments of this application.

In addition, the start time of the DRX on duration may be replaced with an end time of the DRX on duration or a particular time instant of the DRX on duration. This is not limited in embodiments of this application.

If the third time offset is a time offset from the end time of the second time offset to the start time of the first DRX on duration, the wake-up start time may correspondingly be a start time of the first DRX on duration corresponding to the terminal device after the second time offset has elapsed.

For ease of understanding, a relationship between the reception time of the wake-up signal and the wake-up start time is described with reference to FIG. 13 by using the terminal device supporting a DRX mechanism as an example.

Referring to FIG. 13, it is assumed that the wake-up signal is used to wake up the second receiver to allow the same to be in an active state in DRX on duration 1, and that the end time of receiving the wake-up signal is time instant 1. In this case, the wake-up start time (denoted as time instant 2) may be a start time of the first DRX on duration (namely, DRX on duration 1) corresponding to the terminal device after the second time offset has elapsed.

Correspondingly, the first time offset is a time offset between time instant 1 and time instant 2, and the first time offset includes a second time offset and a third time offset. The second time offset may be a preset time offset whose start time is time instant 1, and the third time offset may be a time offset between an end time of the second time offset and the start time of DRX on duration 1.

In embodiments of this application, based on the foregoing description, it may be unnecessary to configure a specific time offset value of the third time offset after the second time offset is configured for the terminal device. Correspondingly, the terminal device may determine a wake-up start time according to the foregoing rule. For example, the rule may include that the wake-up start time may be a start time of the first time domain resource of a target channel received by the terminal device after the second time offset has elapsed. For another example, the rule may include that the wake-up start time may be a start time of a time domain resource of the first PF or the first PO corresponding to the terminal device after the second time offset has elapsed. For still another example, the rule may include that the wake-up start time may be a start time of the first DRX on duration corresponding to the terminal device after the second time offset has elapsed.

In some implementations, the foregoing rule may be preset, pre-configured, or pre-defined. This is not specifically limited in embodiments of this application.

In embodiments of this application, in addition to the foregoing description in which the wake-up time may be determined based on a time offset, the wake-up time may be directly determined based on an indication of the wake-up signal. In other words, the second information may be determined based on the indication of the wake-up signal. It should be noted that the definitions of the second information and the wake-up time are the same as those described above. For details, refer to the foregoing description. The following mainly describes how to determine the second time based on the indication of the wake-up signal.

In some implementations, the wake-up signal may indicate the second information in an explicit manner. For example, the wake-up signal may carry the second information. In other words, the wake-up signal may carry the indication of the wake-up time.

In some other implementations, the wake-up signal may indicate the second information in an implicit manner. For example, the second information may be determined based on a resource position of the wake-up signal. In other words, the wake-up time may be determined based on the resource position of the wake-up signal. In still other words, there is a correspondence between the resource position of the wake-up signal and the second information, and the second information may be determined based on the resource position of the wake-up signal and the correspondence. The correspondence may be a many-to-one correspondence, or the correspondence may be a one-to-one correspondence. This is not limited in embodiments of this application.

Generally, the terminal device can determine a specific wake-up time as long as information about any two of a wake-up start time, a wake-up end time, and a wake-up duration period is known. Correspondingly, one or more types of the foregoing time information may be determined based on the indication of the wake-up signal.

It is assumed that when one type of the foregoing time information may be determined based on the indication of the wake-up signal, another type of the foregoing time information may be obtained in another manner. For example, when the wake-up end time may be determined based on the indication of the wake-up signal, the wake-up duration period may be determined in a pre-configuration manner or a pre-definition manner. For another example, when the wake-up start time may be determined based on the indication of the wake-up signal, the wake-up duration period may be determined in a pre-configuration manner or a pre-definition manner.

Assuming that any two types of the foregoing time information may be determined based on the indication of the wake-up signal, the remaining third type of the information may be indicated in another manner or may not be indicated anymore. For example, when the wake-up end time and the wake-up start time may be determined based on the indication of the wake-up signal, the wake-up duration period may be determined in a pre-configuration manner or a pre-definition manner. For another example, when the wake-up start time and the wake-up duration period may be determined based on the indication of the wake-up signal, the wake-up end time may not be indicated anymore.

Certainly, in embodiments of this application, the foregoing three types of time information may be determined based on the indication of the wake-up signal, which is not limited in embodiments of this application.

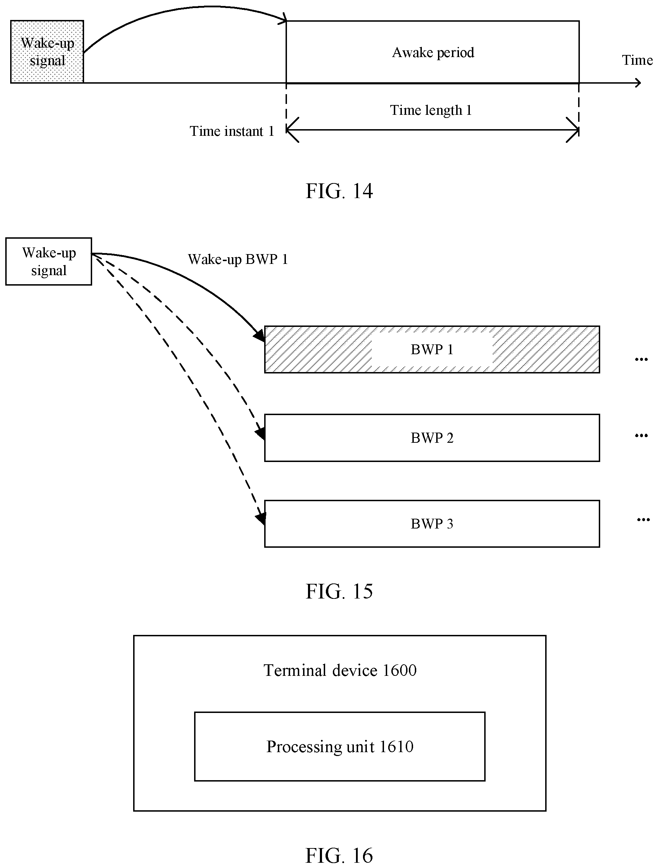

For ease of understanding, the following describes a schematic diagram of indicating a wake-up time by using a wake-up signal according to an embodiment of this application with reference to FIG. 14. It is assumed that the second information carried in the wake-up signal includes the wake-up start time and the wake-up duration period, and that the second information indicates that the wake-up start time is time instant 1 and that the wake-up duration period is time length 1. Correspondingly, after the terminal device receives the wake-up signal, the second receiver may be waked up, and remain awake in a time period whose start time and time length are time instant 1 and time length 1, respectively.

In addition, in embodiments of this application, the network device may also determine the second information in the above-described manner. In this way, the network device may determine a wake-up time of the terminal device based on the second information, thereby communicating with the terminal device based on the wake-up time. This facilitates improving a success rate of communication between the network device and the terminal device.

It should be noted that in a solution in which the network device determines the wake-up time, the above related manner in which the network device is involved in implementing configuration may be replaced with one in which the configuration may be determined by the network device. For brevity, details are not described below.

### Embodiment 2: The first information may include the third information.

In a conventional communications technology, a terminal device needs to operate over an operating frequency domain (for example, an activated downlink BWP or an activated uplink BWP). Similar to the conventional communications technology, after receiving the wake-up signal, the terminal device generally needs to determine an operating frequency domain (for example, a BWP) over which the second receiver operates after it is waked up. At present, however, it is not defined of a frequency domain bandwidth within which the second receiver operates after the terminal device receives the wake-up signal and wakes up the second receiver.

Based on this, in embodiments of this application, the terminal device may determine the operating frequency domain based on the third information, where the third information indicates the operating frequency domain after the second receiver is waked up.

For example, the terminal device may determine an activated BWP based on the third information. The activated BWP may be understood as an activated BWP in which the second receiver of the terminal device operates after it is waked up by the wake-up signal.

In some implementations, the third information is determined based on one or more of the following: information about an operating frequency domain of the second receiver in a last awake period; pre-defined information; pre-configured information; or an indication of the wake-up signal. Certainly, in embodiments of this application, the third information may be determined in another manner, which is not limited in embodiments of this application.

That the third information may be determined based on the information about the operating frequency domain of the second receiver in the last awake period may include that an operating frequency domain of the second primary receiver is the operating frequency domain of the second receiver in the last awake period. Certainly, it may further include that the operating frequency domain of the second primary receiver includes another operating frequency domain that is adjacent to the operating frequency domain of the second receiver in the last awake period.

It should be noted that the last awake period may be understood as an awake period previous to a current awake period, where the current awake period may be understood as an awake period corresponding to the wake-up signal in step S910, namely, an awake period in which the second primary receiver waked up by the wake-up signal in step S910 is.

The third information may be determined based on the pre-defined information, that is, the operating frequency domain may be pre-defined. For ease of understanding, an implementation of the pre-defined operating frequency domain in embodiments of this application is described below by using an example in which the operating frequency domain includes the activated BWP. It should be noted that in embodiments of this application, configuring the activated BWP in a pre-definition manner is not limited to the following several scenarios.

For example, the network device generally configures an ID of a default BWP for the terminal device by using information about a default downlink BWP identifier (also referred to as "defaultDownlinkBWP-Id"). Therefore, in embodiments of this application, the default BWP may be used as a pre-defined BWP. Correspondingly, the activated BWP in which the second receiver of the terminal device operates after it is waked up may be the default BWP.

For another example, in a carrier aggregation scenario, the network device may configure, for the terminal device by using information about a first activated downlink BWP identifier (also referred to as "firstActiveDownlinkBWP-Id"), an ID of a default activated BWP after a secondary cell (secondary cell, Scell) is activated. Therefore, in embodiments of this application, the default activated BWP may be used as a pre-defined BWP. Correspondingly, a BWP in which the second receiver of the terminal device operates with respect to the secondary cell after the second receiver is waked up may be the default activated BWP.

For another example, the network device generally configures a plurality of BWPs for the terminal device. The pre-defined BWP may be one BWP of the plurality of BWPs. The one BWP may be a BWP that has the smallest ID among the IDs of the plurality of BWPs. Certainly, the one BWP may alternatively be a BWP that has the greatest ID among the IDs of the plurality of BWPs.

It should be noted that a BWP whose ID is 0 is generally an initial BWP. The initial BWP is used by a terminal device in an idle state to receive system information and complete random access. Therefore, the BWP having the smallest ID generally refers to a BWP that has the smallest ID among IDs of the remaining BWPs after the initial BWP is excluded from the plurality of BWPs. Certainly, in embodiments of this application, the BWP having the smallest ID may alternatively be the initial BWP.

For another example, when the terminal device is in the idle state or an inactive state, the pre-defined BWP may be the initial BWP.

The third information may be determined based on the pre-configured information. In some implementations, the network device may transmit, to the terminal device, configuration information for configuring the foregoing operating frequency domain, where the configuration information may carry an identifier of the operating frequency domain (for example, an ID of the activated BWP).

The third information may be determined based on the indication of the wake-up signal. In some implementations, the wake-up signal may indicate the third information in an explicit manner, that is, the wake-up signal may carry the third information. In other words, the wake-up signal may carry an indication of the operating frequency domain.

In some other implementations, the wake-up signal may indicate the third information in an implicit manner. For example, the third information may be determined based on a resource position of the wake-up signal. In other words, the operating frequency domain may be determined based on the resource position of the wake-up signal. In still other words, there is a correspondence between the resource position of the wake-up signal and the third information, and the third information may be determined based on the resource position of the wake-up signal and the correspondence. The correspondence may be a many-to-one correspondence, or the correspondence may be a one-to-one correspondence. This is not limited in embodiments of this application.

For ease of understanding, a solution of indicating the operating frequency domain by using the wake-up signal according to an embodiment of this application is described below with reference to FIG. 15 by using an example in which the operating frequency domain is a BWP. It is assumed that the network device configures a plurality of BWPs, namely, BWP 1 to BWP 3, for the terminal device. The third information carried by the wake-up signal indicates that the activated BWP is BWP 1. Correspondingly, after receiving the wake-up signal, the terminal device may determine, based on the third information, that the activated BWP for the second receiver after it is waked up is BWP 1, and that BWP 2 and BWP 3 remain inactive BWPs.

In addition, in embodiments of this application, the network device may also determine the third information in the above-described manner. In this way, the network device may determine an activated BWP for the terminal device based on the third information, thereby communicating with the terminal device based on the activated BWP. This facilitates improving a success rate of communication between the network device and the terminal device.

It should be noted that in a solution in which the network device determines the activated BWP, the above related manner in which the network device is involved in implementing configuration may be replaced with one in which the configuration may be determined by the network device. For brevity, details are not described below.

As described above, the wake-up signal may directly carry the second information and/or the third information. Therefore, information included in the wake-up signal may be encoded to improve reliability of transmitting wakeup information.

In some implementations, the information included in the wake-up signal may be encoded in one or more of the following manners: non-return-to-zero inverted (NRZ) encoding, Manchester (Manchester) encoding, unipolar return-to-zero (Unipolar RZ) encoding, differential bi-phase (DBP) encoding, Miller (Miller) encoding, or differential encoding. Certainly, another encoding manner may be used in embodiments of this application, for example, a newly introduced encoding manner in a future communications system.

For example, the wake-up signal is encoded via Manchester encoding. Correspondences between input bits and encoded bits are shown in Table 1. Referring to Table 1, when an input bit is 0, an encoded bit obtained via Manchester encoding is 10; and when an input bit is 1, an encoded bit obtained via Manchester encoding is 01.

**Table 1**

| Input bit | Encoded bit |
|---|---|
| 0 | 10 |
| 1 | 01 |

In some other embodiments, a check code used for verifying the information included in the wake-up signal is carried in the wake-up signal, to improve reliability of transmitting the wake-up signal. Correspondingly, after a receive end receives the wake-up signal, the information included in the wake-up signal may be checked by using the check code, to verify accuracy of the information included in the wake-up signal.

In some implementations, the check code may include a cyclic redundancy check (cyclic redundancy check, CRC) code. For example, a transmit end may perform CRC calculation on an information bit included in the wake-up signal, to form a CRC check bit (namely, a CRC check code). Certainly, in embodiments of this application, another checking manner may be used to obtain a check code, for example, a newly introduced checking manner in a future communications system.

It should be noted that the above-described embodiments of this application may be used separately from or in combination with each other, which is not limited in embodiments of this application. For ease of understanding, the following mainly describes several possible combination manners. It should be understood that combination manners in embodiments of this application are not limited to the following several manners.

For ease of description, the above-described solution of determining the second information based on a pre-configured or preset rule is referred to as "solution 1"; the above-described solution of determining the second information based on the indication of the wake-up signal is referred to as "solution 2"; the above-described solution of determining the third information based on a pre-configured or preset rule (including determining the third information based on pre-defined information and/or based on the operating frequency domain in the last awake period) is referred to as "solution 3"; and the above-described solution of determining the third information based on the indication of the wake-up signal is referred to as "solution 4".

In combination manner 1, solution 1 and solution 2 may be combined to determine the second information.

Some of the time information in the second information may be determined according to solution 1, and some other time information in the second information may be determined according to solution 2.

For example, the wake-up start time in the second information may be determined according to solution 2, and the wake-up duration period in the second information may be determined according to solution 1.

For another example, the first time offset may be determined according to solution 1, and the wake-up duration period or the wake-up end time may be determined according to solution 2.

In combination manner 2, solution 1, solution 2, and solution 3 may be combined to determine the second information and the third information.

A manner of determining the second information according to a combination of solution 1 and solution 2 has been described in the combination manner 1. For brevity, details are not described herein again.

In combination manner 3, solution 1, solution 2, and solution 4 may be combined to determine the second information and the third information.

A manner of determining the second information according to a combination of solution 1 and solution 2 has been described in the combination manner 1. For brevity, details are not described herein again.

In combination manner 4, solution 1 and solution 3 may be combined; the second information is determined according to solution 1; and the third information is determined according to solution 3.

In combination manner 5, solution 1 and solution 4 may be combined; the second information is determined according to solution 1; and the third information is determined according to solution 4.

In combination manner 6, solution 2 and solution 3 may be combined; the second information is determined according to solution 2; and the third information is determined according to solution 3.

In combination manner 7, solution 2 and solution 4 may be combined; the second information is determined according to solution 2; and the third information is determined according to solution 4.

The method embodiments of this application are described above in detail with reference to FIG. 1 to FIG. 15. Apparatus embodiments of this application are described below in detail with reference to FIG. 16 to FIG. 18. It should be understood that the descriptions of the method embodiments correspond to the descriptions of the apparatus embodiments, and therefore, for parts that are not described in detail, reference may be made to the foregoing method embodiments.

FIG. 16 is a schematic diagram of a terminal device according to an embodiment of this application. The terminal device 1600 shown in FIG. 16 includes a processing unit 1610.

The processing unit 1610 is configured to determine first information if a first receiver of the terminal device receives a wake-up signal, where the first information is used to wake up a second receiver of the terminal device.

In a possible implementation, the first information includes second information, and the second information indicates a wake-up time of the second receiver.

In a possible implementation, the second information is determined based on a first time offset, and the first time offset is a time offset between a reception time of the wake-up signal and the wake-up time of the second receiver.

In a possible implementation, the first time offset is determined based on one or more of the following: a terminal device capability; a time domain resource of a target channel corresponding to the wake-up signal; a time domain resource of a PF or a PO corresponding to the wake-up signal; or DRX on duration corresponding to the wake-up signal.

In a possible implementation, the first time offset includes a second time offset and a third time offset, the second time offset is a preset time offset that uses a reception time of the wake-up signal as a start time, and the third time offset is a time offset from an end time of the second time offset to a wake-up start time of the second receiver.

In a possible implementation, the wake-up start time is one of the following: a start time of the first time domain resource of a target channel received by the terminal device after the second time offset has elapsed; a start time of a time domain resource of the first PF or the first PO to which the terminal device corresponds after the second time offset has elapsed; or a start time of the first DRX on duration of the terminal device after the second time offset has elapsed.

In a possible implementation, the second information is determined based on an indication of the wake-up signal.

In a possible implementation, the second information being determined based on the indication of the wake-up signal includes that the second information is carried in the wake-up signal.

In a possible implementation, the second information being determined based on the indication of the wake-up signal includes that the second information is determined based on a resource position of the wake-up signal.

In a possible implementation, the wake-up time includes one or more of a wake-up start time, a wake-up duration period, or a wake-up end time.

In a possible implementation, the first information includes third information, and the third information indicates an operating frequency domain after the second receiver is waked up.

In a possible implementation, the third information is determined based on one or more of the following: information about an operating frequency domain of the second receiver in a last awake period; pre-defined information; pre-configured information; or an indication of the wake-up signal.

In a possible implementation, the third information being determined based on the indication of the wake-up signal includes that the third information is carried in the wake-up signal.

In a possible implementation, the third information being determined based on the indication of the wake-up signal includes that the third information is determined based on a resource position of the wake-up signal.

In a possible implementation, the operating frequency domain after the second receiver is waked up includes an activated BWP in which the second receiver operates after it is waked up.

In a possible implementation, information carried in the wake-up signal includes encoded information.

In a possible implementation, the wake-up signal includes a check code used for checking information carried in the wake-up signal.

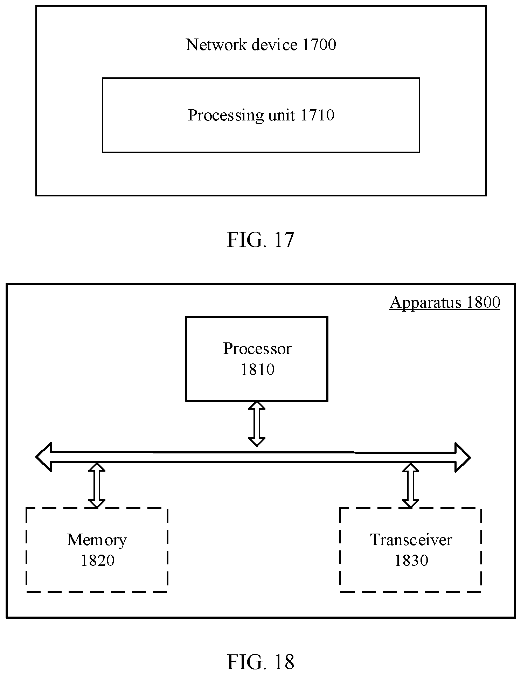

FIG. 17 is a schematic diagram of a network device according to an embodiment of this application. The network device 1700 shown in FIG. 17 includes a processing unit 1710.

The processing unit 1710 is configured to determine first information, where the first information is used to wake up a second receiver of a terminal device; and the second receiver is waked up by a first receiver of the terminal device based on a wake-up signal transmitted by the network device.

In a possible implementation, the first information includes second information, and the second information indicates a wake-up time of the second receiver.

In a possible implementation, the second information is determined based on a first time offset, and the first time offset is a time offset between a reception time of the wake-up signal and the wake-up time of the second receiver.

In a possible implementation, the first time offset is determined based on one or more of the following: a terminal device capability; a time domain resource of a target channel corresponding to the wake-up signal; a time domain resource of a PF or a PO corresponding to the wake-up signal; or DRX on duration corresponding to the wake-up signal.

In a possible implementation, the first time offset includes a second time offset and a third time offset, the second time offset is a preset time offset that uses a reception time of the wake-up signal as a start time, and the third time offset is a time offset from an end time of the second time offset to a wake-up start time of the second receiver.

In a possible implementation, the wake-up start time is one of the following: a start time of the first time domain resource of a target channel received by the terminal device after the second time offset has elapsed; a start time of a time domain resource of the first PF or the first PO to which the terminal device corresponds after the second time offset has elapsed; or a start time of the first DRX on duration of the terminal device after the second time offset has elapsed.

In a possible implementation, the second information is determined based on an indication of the wake-up signal.

In a possible implementation, the second information being determined based on the indication of the wake-up signal includes that the second information is carried in the wake-up signal.

In a possible implementation, the second information being determined based on the indication of the wake-up signal includes that the second information is determined based on a resource position of the wake-up signal.

In a possible implementation, the wake-up time includes one or more of a wake-up start time, a wake-up duration period, or a wake-up end time.

In a possible implementation, the first information includes third information, and the third information indicates an operating frequency domain after the second receiver is waked up.

In a possible implementation, the third information is determined based on one or more of the following: information about an operating frequency domain of the second receiver in a last awake period; pre-defined information; pre-configured information; or an indication of the wake-up signal.

In a possible implementation, the third information being determined based on the indication of the wake-up signal includes that the third information is carried in the wake-up signal.

In a possible implementation, the third information being determined based on the indication of the wake-up signal includes that the third information is determined based on a resource position of the wake-up signal.

In a possible implementation, the operating frequency domain after the second receiver is waked up includes an activated BWP in which the second receiver operates after it is waked up.

In a possible implementation, information carried in the wake-up signal includes encoded information.

In a possible implementation, the wake-up signal includes a check code used for checking information carried in the wake-up signal.

In an optional embodiment, the processing unit 1610 may be a processor 1810. The terminal device 1600 may further include a transceiver 1830 and a memory 1820. Details are shown in FIG. 18.

In an optional embodiment, the processing unit 1710 may be a processor 1810. The network device 1700 may further include a transceiver 1830 and a memory 1820, which are specifically shown in FIG. 18.

FIG. 18 is a schematic structural diagram of a communications apparatus according to an embodiment of this application. Dashed lines in FIG. 18 indicate that the units or modules are optional. The apparatus 1800 may be configured to implement a method described in the foregoing method embodiments. The apparatus 1800 may be a chip, a terminal device, or a network device.

The apparatus 1800 may include one or more processors 1810. The processor 1810 may allow the apparatus 1800 to implement a method described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program that may be executed by the processor 1810 to cause the processor 1810 to perform a method described in the foregoing method embodiments. The memory 1820 may be separate from or integrated into the processor 1810.

The apparatus 1800 may further include a transceiver 1830. The processor 1810 may communicate with another device or chip through the transceiver 1830. For example, the processor 1810 may transmit data to and receive data from another device or chip through the transceiver 1830.

An embodiment of this application further provides a computer-readable storage medium for storing a program. The computer-readable storage medium may be applied to the terminal or the network device provided in embodiments of this application, and the program causes a computer to perform the methods that are performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods that are performed by the terminal or the network device in various embodiments of this application.

An embodiment of this application further provides a computer program. The computer program may be applied to the terminal or the network device provided in embodiments of this application, and the computer program causes a computer to perform the methods that are performed by the terminal or the network device in various embodiments of this application.

It should be understood that the terms "system" and "network" in this application may be used interchangeably. In addition, the terms used in this application are only used to illustrate the specific embodiments of this application, and are not intended to limit this application. The terms "first", "second", "third", "fourth", and the like in the specification, claims, and drawings of this application are used to distinguish between different objects, rather than to describe a particular order. In addition, the terms "include" and "have" and any variations thereof are intended to cover a non-exclusive inclusion.

In embodiments of this application, the term "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. It should also be understood that the determining of B based on A does not mean that B is determined based only on A, but instead B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented in a manner in which corresponding code, a table, or other related information available for indication is pre-stored in a device (for example, including the terminal device and the network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

In embodiments of this application, sequence numbers of the foregoing processes do not mean execution sequences, which should be determined according to functions and internal logic of the processes, and the sequence numbers should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

Units described as separate components may be or may not be physically separate, and components displayed as units may be or may not be physical units, that is, may be located in one position or distributed on a plurality of network units. Some or all of the units may be selected according to actual needs to achieve the objectives of solutions in embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
determining, by a terminal device, first information if a first receiver of the terminal device receives a wake-up signal, wherein the first information is used to wake up a second receiver of the terminal device.

2. The method according to claim 1, wherein the first information comprises second information, and the second information indicates a wake-up time of the second receiver.

3. The method according to claim 2, wherein the second information is determined based on a first time offset, and the first time offset is a time offset between a reception time of the wake-up signal and the wake-up time of the second receiver.

4. The method according to claim 3, wherein the first time offset is determined based on one or more of following:
a terminal device capability;
a time domain resource of a target channel corresponding to the wake-up signal;
a time domain resource of a PF or a PO corresponding to the wake-up signal; or
DRX on duration corresponding to the wake-up signal.

5. The method according to any one of claims 1 to 4, wherein the first time offset comprises a second time offset and a third time offset, the second time offset is a preset time offset that uses a reception time of the wake-up signal as a start time, and the third time offset is a time offset from an end time of the second time offset to a wake-up start time of the second receiver.

6. The method according to claim 5, wherein the wake-up start time is one of following:
a start time of the first time domain resource of a target channel received by the terminal device after the second time offset has elapsed;
a start time of a time domain resource of the first PF or the first PO to which the terminal device corresponds after the second time offset has elapsed; or
a start time of the first DRX on duration of the terminal device after the second time offset has elapsed.

7. The method according to any one of claims 2 to 6, wherein the second information is determined based on an indication of the wake-up signal.

8. The method according to claim 7, wherein the second information being determined based on the indication of the wake-up signal comprises that the second information is carried in the wake-up signal.

9. The method according to claim 7, wherein the second information being determined based on the indication of the wake-up signal comprises that the second information is determined based on a resource position of the wake-up signal.

10. The method according to any one of claims 1 to 9, wherein the wake-up time comprises one or more of a wake-up start time, a wake-up duration period, or a wake-up end time.

11. The method according to any one of claims 1 to 10, wherein the first information comprises third information, and the third information indicates an operating frequency domain after the second receiver is waked up.

12. The method according to claim 11, wherein the third information is determined based on one or more of following:
information about an operating frequency domain of the second receiver in a last awake period;
pre-defined information;
pre-configured information; or
an indication of the wake-up signal.

13. The method according to claim 12, wherein the third information being determined based on the indication of the wake-up signal comprises that the third information is carried in the wake-up signal.

14. The method according to claim 12, wherein the third information being determined based on the indication of the wake-up signal comprises that the third information is determined based on a resource position of the wake-up signal.

15. The method according to any one of claims 11 to 14, wherein the operating frequency domain after the second receiver is waked up comprises an activated BWP in which the second receiver operates after it is waked up.

16. The method according to any one of claims 1 to 15, wherein information carried in the wake-up signal comprises encoded information.

17. The method according to any one of claims 1 to 16, wherein the wake-up signal comprises a check code used for checking information carried in the wake-up signal.

18. A wireless communication method, comprising:
determining, by a network device, first information, wherein the first information is used to wake up a second receiver of a terminal device; and
wherein the second receiver is waked up by a first receiver of the terminal device based on a wake-up signal transmitted by the network device.

19. The method according to claim 18, wherein the first information comprises second information, and the second information indicates a wake-up time of the second receiver.

20. The method according to claim 19, wherein the second information is determined based on a first time offset, and the first time offset is a time offset between a reception time of the wake-up signal and the wake-up time of the second receiver.

21. The method according to claim 20, wherein the first time offset is determined based on one or more of following:
a terminal device capability;
a time domain resource of a target channel corresponding to the wake-up signal;
a time domain resource of a PF or a PO corresponding to the wake-up signal; or
DRX on duration corresponding to the wake-up signal.

22. The method according to any one of claims 18 to 21, wherein the first time offset comprises a second time offset and a third time offset, the second time offset is a preset time offset that uses a reception time of the wake-up signal as a start time, and the third time offset is a time offset from an end time of the second time offset to a wake-up start time of the second receiver.

23. The method according to claim 22, wherein the wake-up start time is one of following:
a start time of the first time domain resource of a target channel received by the terminal device after the second time offset has elapsed;
a start time of a time domain resource of the first PF or the first PO to which the terminal device corresponds after the second time offset has elapsed; or
a start time of the first DRX on duration of the terminal device after the second time offset has elapsed.

24. The method according to any one of claims 19 to 23, wherein the second information is determined based on an indication of the wake-up signal.

25. The method according to claim 24, wherein the second information being determined based on the indication of the wake-up signal comprises that the second information is carried in the wake-up signal.

26. The method according to claim 24, wherein the second information being determined based on the indication of the wake-up signal comprises that the second information is determined based on a resource position of the wake-up signal.

27. The method according to any one of claims 18 to 26, wherein the wake-up time comprises one or more of a wake-up start time, a wake-up duration period, or a wake-up end time.

28. The method according to any one of claims 18 to 27, wherein the first information comprises third information, and the third information indicates an operating frequency domain after the second receiver is waked up.

29. The method according to claim 28, wherein the third information is determined based on one or more of following:
information about an operating frequency domain of the second receiver in a last awake period;
pre-defined information;
pre-configured information; or
an indication of the wake-up signal.

30. The method according to claim 29, wherein the third information being determined based on the indication of the wake-up signal comprises that the third information is carried in the wake-up signal.

31. The method according to claim 29, wherein the third information being determined based on the indication of the wake-up signal comprises that the third information is determined based on a resource position of the wake-up signal.

32. The method according to any one of claims 28 to 31, wherein the operating frequency domain after the second receiver is waked up comprises an activated BWP in which the second receiver operates after it is waked up.

33. The method according to any one of claims 18 to 32, wherein information carried in the wake-up signal comprises encoded information.

34. The method according to any one of claims 18 to 33, wherein the wake-up signal comprises a check code used for checking information carried in the wake-up signal.

35. A terminal device, comprising:
a processing unit, configured to determine first information if a first receiver of the terminal device receives a wake-up signal, wherein the first information is used to wake up a second receiver of the terminal device.

36. The terminal device according to claim 35, wherein the first information comprises second information, and the second information indicates a wake-up time of the second receiver.

37. The terminal device according to claim 36, wherein the second information is determined based on a first time offset, and the first time offset is a time offset between a reception time of the wake-up signal and the wake-up time of the second receiver.

38. The terminal device according to claim 37, wherein the first time offset is determined based on one or more of following:
a terminal device capability;
a time domain resource of a target channel corresponding to the wake-up signal;
a time domain resource of a PF or a PO corresponding to the wake-up signal; or
DRX on duration corresponding to the wake-up signal.

39. The terminal device according to any one of claims 35 to 38, wherein the first time offset comprises a second time offset and a third time offset, the second time offset is a preset time offset that uses a reception time of the wake-up signal as a start time, and the third time offset is a time offset from an end time of the second time offset to a wake-up start time of the second receiver.

40. The terminal device according to claim 39, wherein the wake-up start time is one of following:
a start time of the first time domain resource of a target channel received by the terminal device after the second time offset has elapsed;
a start time of a time domain resource of the first PF or the first PO to which the terminal device corresponds after the second time offset has elapsed; or
a start time of the first DRX on duration of the terminal device after the second time offset has elapsed.

41. The terminal device according to any one of claims 36 to 40, wherein the second information is determined based on an indication of the wake-up signal.

42. The terminal device according to claim 41, wherein the second information being determined based on the indication of the wake-up signal comprises that the second information is carried in the wake-up signal.

43. The terminal device according to claim 41, wherein the second information being determined based on the indication of the wake-up signal comprises that the second information is determined based on a resource position of the wake-up signal.

44. The terminal device according to any one of claims 35 to 43, wherein the wake-up time comprises one or more of a wake-up start time, a wake-up duration period, or a wake-up end time.

45. The terminal device according to any one of claims 35 to 44, wherein the first information comprises third information, and the third information indicates an operating frequency domain after the second receiver is waked up.

46. The terminal device according to claim 45, wherein the third information is determined based on one or more of following:
information about an operating frequency domain of the second receiver in a last awake period;
pre-defined information;
pre-configured information; or
an indication of the wake-up signal.

47. The terminal device according to claim 46, wherein the third information being determined based on the indication of the wake-up signal comprises that the third information is carried in the wake-up signal.

48. The terminal device according to claim 46, wherein the third information being determined based on the indication of the wake-up signal comprises that the third information is determined based on a resource position of the wake-up signal.

49. The terminal device according to any one of claims 45 to 48, wherein the operating frequency domain after the second receiver is waked up comprises an activated BWP in which the second receiver operates after it is waked up.

50. The terminal device according to any one of claims 35 to 49, wherein information carried in the wake-up signal comprises encoded information.

51. The terminal device according to any one of claims 35 to 50, wherein the wake-up signal comprises a check code used for checking information carried in the wake-up signal.

52. A network device, comprising:
a processing unit, configured to determine first information, wherein the first information is used to wake up a second receiver of a terminal device; and
wherein the second receiver is waked up by a first receiver of the terminal device based on a wake-up signal transmitted by the network device.

53. The network device according to claim 52, wherein the first information comprises second information, and the second information indicates a wake-up time of the second receiver.

54. The network device according to claim 53, wherein the second information is determined based on a first time offset, and the first time offset is a time offset between a reception time of the wake-up signal and the wake-up time of the second receiver.

55. The network device according to claim 54, wherein the first time offset is determined based on one or more of following:
a terminal device capability;
a time domain resource of a target channel corresponding to the wake-up signal;
a time domain resource of a PF or a PO corresponding to the wake-up signal; or
DRX on duration corresponding to the wake-up signal.

56. The network device according to any one of claims 52 to 55, wherein the first time offset comprises a second time offset and a third time offset, the second time offset is a preset time offset that uses a reception time of the wake-up signal as a start time, and the third time offset is a time offset from an end time of the second time offset to a wake-up start time of the second receiver.

57. The network device according to claim 56, wherein the wake-up start time is one of following:
a start time of the first time domain resource of a target channel received by the terminal device after the second time offset has elapsed;
a start time of a time domain resource of the first PF or the first PO to which the terminal device corresponds after the second time offset has elapsed; or
a start time of the first DRX on duration of the terminal device after the second time offset has elapsed.

58. The network device according to any one of claims 53 to 57, wherein the second information is determined based on an indication of the wake-up signal.

59. The network device according to claim 58, wherein the second information being determined based on the indication of the wake-up signal comprises that the second information is carried in the wake-up signal.

60. The network device according to claim 58, wherein the second information being determined based on the indication of the wake-up signal comprises that the second information is determined based on a resource position of the wake-up signal.

61. The network device according to any one of claims 52 to 60, wherein the wake-up time comprises one or more of a wake-up start time, a wake-up duration period, or a wake-up end time.

62. The network device according to any one of claims 52 to 60, wherein the first information comprises third information, and the third information indicates an operating frequency domain after the second receiver is waked up.

63. The network device according to claim 62, wherein the third information is determined based on one or more of following:
information about an operating frequency domain of the second receiver in a last awake period;
pre-defined information;
pre-configured information; or
an indication of the wake-up signal.

64. The network device according to claim 63, wherein the third information being determined based on the indication of the wake-up signal comprises that the third information is carried in the wake-up signal.

65. The network device according to claim 63, wherein the third information being determined based on the indication of the wake-up signal comprises that the third information is determined based on a resource position of the wake-up signal.

66. The network device according to any one of claims 62 to 65, wherein the operating frequency domain after the second receiver is waked up comprises an activated BWP in which the second receiver operates after it is waked up.

67. The network device according to any one of claims 52 to 66, wherein information carried in the wake-up signal comprises encoded information.

68. The network device according to any one of claims 52 to 67, wherein the wake-up signal comprises a check code used for checking information carried in the wake-up signal.

69. A terminal device, comprising a memory and a processor, wherein the memory is configured to store a program, and the processor is configured to invoke the program in the memory, to cause the terminal to execute the method according to any one of claims 1 to 17.

70. A network device, comprising a memory and a processor, wherein the memory is configured to store a program, and the processor is configured to invoke the program in the memory, to cause the network device to execute the method according to any one of claims 18 to 34.

71. An apparatus, comprising a processor, configured to invoke a program from a memory, to cause the apparatus to execute the method according to any one of claims 1 to 34.

72. A chip, comprising a processor, configured to invoke a program from a memory, to cause a device installed with the chip to execute the method according to any one of claims 1 to 34.

73. A computer-readable storage medium, storing a program thereon, wherein the program causes a computer to execute the method according to any one of claims 1 to 34.

74. A computer program product, comprising a program, wherein the program causes a computer to execute the method according to any one of claims 1 to 34.

75. A computer program, wherein the computer program causes a computer to execute the method according to any one of claims 1 to 34.
